# EUROPEAN PATENT SPECIFICATION

(11) **EP 0 890 279 B1**
(45) Date of publication and mention of the grant of the patent: **25.02.2004**
(21) Application number: 97917319.2
(22) Date of filing: 16.04.1997
(51) Int. Cl.: H04Q 7/34, H04B 17/00

(54) **METHOD FOR MEASURING INTERMODULATION**
INTERMODULATIONSMESSUNGSVERFAHREN
PROCEDE DE MESURE DE L'INTERMODULATION

(30) Priority: 17.04.1996 FI 961686
(43) Date of publication of application: 13.01.1999
(73) Proprietor: Nokia Corporation, 02150 Espoo (FI)
(72) Inventor: LAITINEN, Jukka, FIN-90520 Oulu (FI)
(74) Representative: Holmström, Stefan Mikael
(86) International application number: PCT/FI1997/000236
(87) International publication number: WO 1997/039597

(56) References cited:
- WO-A-95/08246
- WO-A-95/16331
- WO-A-96/04760

## Description

The present invention relates to a method for measuring intermodulation of transmitters of a base station, the base station comprising several transmitters connected to a common transmitting antenna for transmitting signals by means of said antenna. The invention also relates to a base station of a radio system comprising several receivers and several transmitters, whereby the transmitters are connected to a common antenna means for transmitting signals by means of the antenna means, and whereby at least one of the receivers comprises means for measuring the signal level of a received signal.

Intermodulation, that is, modulation between signal components formed of several frequencies so that there are sum frequencies and difference frequencies of the original components amidst the generated frequencies, is one of the factors that may disturb the operation of a base station of a cellular radio system having several transmitter units, for example. If it is assumed that the transmitters of the base station have available three closely situated frequency channels, that is, channels f1, f2 and f3, for example, mixing results may be generated between the signals to be sent on the frequency channels in question due to the non-linearity of components (such as filters) or poor connections, the frequencies of the mixing results being sums and differences of the original frequencies or of their harmonious multiples. If only the mixing results whose frequencies are close to the original frequencies are taken into account, disturbances may be generated by the effect of intermodulations on the following frequencies, for example: f1+f2-f3, f1+f3-f2, f2+f3-f1, 2*f1-f2, 2*f1-f3, 2*f2-f1, 2*f2-f3, 2*f3-f1 and 2*f3-f2. If one of these frequencies should be on a frequency that the base station utilizes for receiving, for example, disturbance is generated, which may considerably weaken the reception capability of the base station.

In connection with base stations of cellular radio systems, for example, the typical tendency has been to measure and avoid the disturbances generated by intermodulations in such a manner that an external spectrum analyzer and band-eliminating filters with relatively high set quality requirements have been connected to the base station during the testing stage after assembling the base station. After this the spectrum analyzer has measured the disturbances caused by the intermodulation of the signals of the transmitters of the base station on frequency channels of the base station in reception use.

The most significant disadvantage of the prior art solution described above is that all measurement couplings necessary for testing also have an effect as such on intermodulations. Furthermore, the filters needed in measurement are expensive because of the high quality requirements set for them. It has also been very laborious to carry out measurements because of the high number of necessary filters, and in practice it has not been possible to carry out measurements on base stations with several transmitters (> 3 TRX) as the number of filters needed for these measurements has been very high. If at some stage it has been necessary to change the frequency channels of the base station, for example, during the redistribution of frequency channels of the network, the frequencies where intermodulation is present have naturally changed, whereby the measurements made during the assembling stage of the base station cannot be used any more because of new frequency channels.

Previously there is also known from WO-A-9508246 a solution for supervising base station radio channels. In this solution the interference levels of radio channels used by a control or traffic channel hopping from one radio channel to another during a connection is measured. This reference, however, fails to teach or suggest a solution which would make it possible to measure intermodulation of transmitters of the base station.

The object of the present invention is to solve the problem explained above and provide a method by which the measurement of disturbances caused by intermodulation of signals of transmitters of the base station will become significantly easier and more accurate. This object is attained by the method of the invention which is characterized in that the method comprises: reserving one receiver of the base station for test use, arranging the transmitters of the base station to send a predetermined signal, and arranging said receiver to receive signals sequentially from frequency channels of the base station normally in reception use and to measure the signal level of the received signal for each of said frequency channels.

The invention also relates to a base station to which the method of the invention can be applied. The base station of the invention is characterized in that the base station comprises testing means for carrying out intermodulation measurements of the signals of the transmitters, the transmitters are responsive to the testing means for generating predetermined signals and for supplying them to the antenna means, and said at least one receiver is responsive to the testing means for receiving signals from frequency channels of the base station normally in reception use and for measuring the signal level of the received signal on each frequency channel.

The term antenna means refers in this connection both to the combiner element by means of which signals obtained from different transmitters are summed and to the actual transmitting antenna.

The invention is based on the idea that the intermodulations caused by the signals of the transmitters of the base station can be measured more easily and more accurately than previously when a receiver of the base station is employed in measurements. In that case it will not be necessary to use separate measuring equipments which disturb the measuring result and which are relatively expensive. The method of the invention can be employed also in existing base station with very low alteration costs as the introduction of the method can be enabled in many already existing base stations by means of a computer program. Measurements can also be carried out for base stations having several transceiver units where it has not previously been at all possible to carry out corresponding measurements. It will thus become easier and faster to carry out measurements in connection with the reconfiguration of the frequency channels of the base station, for example, because in most cases separate equipments required for carrying out the measurement need not be transported to the installation site, but at best measurements can be accomplished by remote control from a network management centre. The most significant advantages of the method and the base station of the invention are thus more accurate and faster obtainable measurement results than previously, measurements can also be made on base stations having several transceiver units (e.g. 10), measurements can also be carried out at the installation site of the base station and expensive accessories are no longer needed in measurements.

The preferred embodiments of the base station of the invention appear from accompanying dependent claims 2 and 4 to 5.

In the following, the invention will be explained by way of example with reference to the appended drawings, wherein
Figure 1 shows a flow diagram of a first preferred embodiment of the method of the invention,
Figure 2 shows a flow diagram of a first preferred embodiment of the base station of the invention.

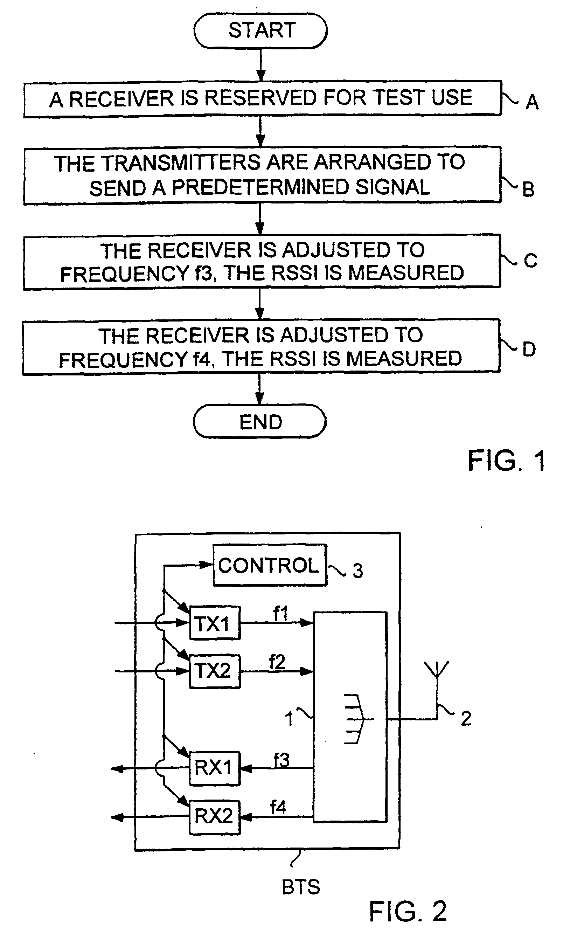

The flow diagram of Figure 1 can be applied to a base station of the GSM cellular radio system (Groupe Spécial Mobile) for measuring intermodulation of the signals of the transmitters of the base station. During the measurement of intermodulation the base station is preferably completely disabled from traffic use, in which case all the transmitters of the base station can be freely employed for test use, whereby the disturbances caused by all individual receivers can be measured in one go.

In block A one of the receivers of the base station is reserved for test use.

In block B the transmitters of the base station are arranged to generate and supply a specific signal on a specific power level to the transmitting antenna of the base station. Each transmitter uses then the same frequency channel as it uses in normal traffic use of the transmitter. If one or more of the transmitters utilizes frequency hopping, that is, the frequency channels used by it vary from one time slot to another, a separate measurement has to be carried out for each frequency channel. The power levels of the transmitters are also selected so that they correspond as closely as possible to the power level used by the transmitters in normal traffic use.

In Block C the receiver reserved for test use is arranged to receive signals on frequency channel f3 which is one of the frequency channels in reception use of the base station. The receiver in test use can then measure the disturbances caused by signal intermodulation of transmitters on frequency channel f3 by measuring the power level on this frequency channel, that is, the signal level of the received signal RSSI (Received Signal Strength Indication).

in Block D the receiver reserved for test use is arranged to receive signals from frequency channel f4 which is next in line and normally in reception use of the base station. After this, the receiver measures the signal level of the received signal as explained above. When measurement has been done for frequency channel f4, the receiver is arranged to the next frequency channel normally in reception use if there are still any frequency channels, until all the channels normally in reception use have been gone through.

When all the frequency channels to be measured have been gone through, the base station sends a report of them to the operator, after which the base station can be enabled for traffic use if significant disturbances caused by intermodulation of the signals of the transmitters have not been detected.

Figure 2 shows a block diagram of a first preferred embodiment of the base station of the invention. The base station of Figure 2 may be a base station of the GSM cellular radio system, for example, having two transmitters TRX1 and TRX2, one of which during normal traffic use sends signals on frequency channel f1 and the other correspondingly on frequency channel f2. The signals supplied by the transmitters propagate then via a combiner element 1 to the antenna 2 of the base station. Correspondingly, the signals received with antenna 2 are branched from the combiner element 1 of the base station to its receivers RX1 and RX2. The receiver RX1 is arranged to receive signals on frequency channel f3 and the receiver RX2 correspondingly on frequency channel f4.

In the GSM system the Uplink channel (from the mobile station to the base station) and the Downlink channel (from the base station to the mobile station) included in the same logical channel are separated from one another by a duplex interval of 45 MHz. This means that if the transmitter TX1 of the base station sends to a specific mobile station on frequency channel f1=959,80 MHz, for example, the receiver RX1 of the base station receives signals from the mobile station on frequency channel f3=914,80 MHz.

In the case of Figure 2, the base station BTS comprises one single antenna 2 which the base station utilizes both as a transmitting and receiving antenna. The signals supplied to the antenna 2 and the signals received therefrom are conveyed through the combiner element 1 which includes a duplex filter, for instance. No new couplings are needed for measuring intermodulation of the signals of the transmitters TX1 and TX2 of the base station in Figure 2, but the measurement can be carried out entirely by means of a computer program.

However, differing from the case of Figure 2, if the base station to be measured is such that it has a separate transmitting antenna and a separate receiving antenna, in which case the base station does not have a duplex filter, the transmitters TX1, TX2 and the receivers RX1, RX2 of the base station have to be coupled to an external duplex filter for the duration of measurements (not shown in the figure).

The base station of Figure 2 comprises a control unit 3 which includes means for carrying out measurements. The control unit 3 may be a computer program stored in the memory of the base station, for example, with which program the transmitters TX1, TX2 and the receivers RX1, RX2 of the base station can be controlled in the desired manner during the test, in which case the operator may activate the test by remote control from the network management centre, for example. After this the control unit carries out the test independently and sends in the end a report of the test results to the operator. Alternatively, the control unit 3 may be a connection unit to which an external terminal controlling the execution of the test is connected. In that case a service person at the installation site of the base station can control the execution of the test as desired by means of an external terminal and immediately obtain the result of the test at the terminal.

For measuring the disturbances caused by the intermodulation of the signals of the transmitters TX1, TX2 of the base station BTS, a control signal is transmitted from the control unit 3 to the transmitters, which induces the transmitters TX1, TX2 to start sending a predetermined signal on a predetermined power level on their normal traffic channels f1 and f2. Correspondingly, a control signal is transmitted from the control unit at least to one of the receivers, that is, the receiver RX1, for example, which induces the receiver to start receiving the signals on the first frequency channel f3 of the base station in reception use. In that case the receiver also measures the signal level RSSI of the received signals and transmits it to the control unit 3.

When the frequency channel f3 has been measured, a second control signal is transmitted from the control unit 3 to the receiver RX1, in which case the receiver moves to the second frequency channel f4 of the base station in reception use and measures the signal level RSSI of the signals received from said channel and sends information about it to the control unit 3. When the control unit 3 has received the measurement results, the transmitters TX1, TX2 and the receivers RX1, RX2 of the base station are restored to their normal state, whereby the base station will be ready for traffic use.

It is to be understood that the foregoing explanation and the figures relating thereto are only meant to illustrate the present invention. Different variations and modifications of the invention will be evident to those skilled in the art without deviating from the scope and spirit of the invention disclosed in the appended claims.

## Claims

1. A method for measuring intermodulation of transmitters of a base station, the base station comprising several transmitters connected to a common transmitting antenna (2) for transmitting signals by means of said antenna, **characterized in that** the method comprises:
reserving one receiver (A) of the base station for test use,
arranging the transmitters of the base station to send a predetermined signal (B), and
arranging said receiver to receive signals sequentially from frequency channels of the base station normally in reception use and to measure the signal level of the received signal for each of said frequency channels (C, D).

2. A method according to claim **1, characterized in that** the receivers of the base station are connected to a receiving antenna separate from the transmitting antenna (2) of the base station, whereby an external duplex filter is arranged to the base station for measuring intermodulations of the transmitters, the outputs of the transmitters (TX1, TX2) and the inputs of the receivers (RX1, RX2) of the base station being connected to the filter for the duration of measurements.

3. A base station (BTS) of a radio system comprising several receivers (RX1, RX2) and several transmitters (TX1, TX2), whereby the transmitters are connected to a common antenna means (1, 2) for transmitting radio frequency signals by means of the antenna means, and whereby at least one of the receivers comprises means for measuring the signal level of a received signal, **characterized in that**
the base station comprises testing means (3) for carrying out intermodulation measurements of the signals of the transmitters,
the transmitters (TX1, TX2) are responsive to said testing means (3) for generating predetermined signals and for supplying them to the antenna means (1, 2), and
said at least one receiver (RX1) is responsive to the testing means (3) for receiving signals from frequency channels (f3, f4) of the base station normally in reception use and for measuring the signal level of the received signal on each frequency channel (f3, f4).

4. A base station according to claim 3, **characterized in that** said base station is a base station (BTS) of the GSM cellular radio system, and that said receiver comprises means for measuring the signal level of the received signal with RSSI measurements.

5. A base station according to claim 3, **characterized in that** the testing means (3) include means for carrying out independently intermodulation measurements of the signals of the transmitters (TX1, TX2) of the base station and for sending a report describing the measurement results to the operator in response to a measurement request message received by the base station (BTS).

## Patentansprüche

1. Verfahren zum Messen einer Intermodulation von Sendern einer Basisstation, wobei die Basisstation mehrere an eine gemeinsame Sendeantenne (2) angeschlossene Sender zum Übertragen von Signalen mittels der Antenne aufweist, **dadurch gekennzeichnet, dass** das Verfahren die Schritte aufweist:
Reservieren eines Empfängers (A) der Basisstation zu Testzwecken,
Einrichten der Sender der Basisstation zum Senden eines vorbestimmten Signals (B), und
Einrichten des Empfängers zum aufeinander folgenden Empfangen von Signalen von Frequenzkanälen der Basisstation, die normalerweise beim Empfang verwendet werden, und zum Messen des Signalpegels des empfangenen Signals für jeden der Frequenzkanäle (C, D).

2. Verfahren gemäß Anspruch 1, **dadurch gekennzeichnet, dass** die Empfänger der Basisstation an eine von der Sendeantenne (2) der Basisstation gesonderte Empfangsantenne angeschlossen sind, wobei ein externer Duplexfilter zum Messen von Intermodulationen der Sender an der Basisstation eingerichtet ist, wobei die Ausgaben der Sender (TX1, TX2) und die Eingaben der Empfänger (RX1, RX2) der Basisstation für die Dauer von Messungen mit dem Filter verbunden sind.

3. Basisstation (BTS) eines Funksystems mit mehreren Empfängern (RX1, RX2) und mehreren Sendern (TX1, TX2), wobei die Sender an eine gemeinsame Antenneneinrichtung (1, 2) angeschlossen sind, um Funkfrequenzsignale mittels der Antenneneinrichtung zu übertragen, und wobei zumindest einer der Empfänger eine Einrichtung zum Messen des Signalpegels eines empfangenen Signals aufweist, **dadurch gekennzeichnet, dass**
die Basisstation eine Testeinrichtung (3) zur Durchführung von Intermodulationsmessungen der Signale der Sender aufweist,
die Sender (TX1, TX2) auf die Testeinrichtung (3) ansprechen, um vorbestimmte Signale zu erzeugen und diese an die Antenneneinrichtung (1, 2) auszugeben, und
der zumindest eine Empfänger (RX1) auf die Testeinrichtung (3) anspricht, um Signale von Frequenzkanälen (f3, f4) der Basisstation, die normalerweise beim Empfang verwendet werden, zu empfangen und den Signalpegel des empfangenen Signals auf jedem Frequenzkanal (f3, f4) zu messen.

4. Basisstation gemäß Anspruch 3, **dadurch gekennzeichnet, dass** die Basisstation eine Basisstation (BTS) des zellularen GSM-Funksystems ist, und dass der Empfänger eine Einrichtung zum Messen des Signalpegels des empfangenen Signals mit RSSI-Messungen aufweist.

5. Basisstation gemäß Anspruch 3, **dadurch gekennzeichnet, dass** die Testeinrichtung (3) eine Einrichtung zur unabhängigen Durchführung von Intermodulationsmessungen der Signale der Sender (TX1, TX2) der Basisstation und zum Senden eines die Messergebnisse beschreibenden Berichts an den Betreiber als Antwort auf eine von der Basisstation (BTS) empfangene Messungsanforderungsnachricht umfasst.

## Revendications

1. Procédé pour mesurer une intermodulation d'émetteurs d'une station de base, la station de base comprenant plusieurs émetteurs connectés à une antenne d'émission commune (2) pour émettre des signaux au moyen de ladite antenne, **caractérisé en ce que** le procédé comprend :
la réservation d'un récepteur (A) de la station de base à une utilisation pour des tests,
l'agencement des émetteurs de la station de base pour envoyer un signal prédéterminé (B), et
l'agencement dudit récepteur pour recevoir des signaux de manière séquentielle de canaux de fréquence de la station de base normalement dans une utilisation pour réception et pour mesurer le niveau de signal du signal reçu pour chacun desdits canaux de fréquence (C, D).

2. Procédé selon la revendication 1, **caractérisé en ce que** les récepteurs de la station de base sont connectés à une antenne de réception séparée de l'antenne d'émission (2) de la station de base, moyennant quoi un filtre duplex externe est agencé dans la station de base pour mesurer des intermodulations des émetteurs, les sorties des émetteurs (TX1, TX2) et les entrées des récepteurs (RX1, RX2) de la station de base étant connectées au filtre pendant la durée des mesures.

3. Station de base (BTS) d'un système radio comprenant plusieurs récepteurs (RX1, RX2) et plusieurs émetteurs (TX1, TX2), moyennant quoi les émetteurs sont connectés à des moyens formant antenne commune (1, 2) pour émettre des signaux radiofréquence à l'aide des moyens formant antenne, et moyennant quoi au moins l'un des récepteurs comprend des moyens pour mesurer le niveau de signal d'un signal reçu, **caractérisée en ce que**
la station de base comprend des moyens de test (3) pour effectuer des mesures d'intermodulation des signaux des émetteurs,
les émetteurs (TX1, TX2) sont sensibles auxdits moyens de test (3) pour générer des signaux prédéterminés et pour les délivrer aux moyens formant antenne (1, 2), et
ledit au moins un récepteur (RX1) est sensible aux moyens de test (3) pour recevoir des signaux de canaux de fréquence (f3, f4) de la station de base normalement dans une utilisation de réception et pour mesurer le niveau de signal du signal reçu sur chaque canal de fréquence (f3, f4).

4. Station de base selon la revendication 3, **caractérisée en ce que** ladite station de base est une station de base (BTS) du système radio cellulaire GSM, et **en ce que** ledit récepteur comprend des moyens pour mesurer le niveau de signal du signal reçu par des mesures RSSI.

5. Station de base selon la revendication 3, **caractérisée en ce que** les moyens de test (3) comprennent des moyens pour effectuer indépendamment des mesures d'intermodulation des signaux des émetteurs (TX1, TX2) de la station de base et pour envoyer un rapport décrivant les résultats des mesures à l'opérateur en réponse à un message de demande de mesure reçu par la station de base (BTS).
